# EUROPEAN PATENT APPLICATION

(11) **EP 4 112 206 A1**
(43) Date of publication of application: **04.01.2023**
(21) Application number: 21183255.5
(22) Date of filing: 01.07.2021
(51) Int. Cl.: B22F 1/00, B33Y 70/10, C22C 1/05, C22C 29/08, C22C 29/10, C22C 29/00

(54) **METHOD OF MAKING A POWDER FOR ADDITIVE MANUFACTURING**

(71) Applicant: Sandvik Machining Solutions AB, 811 81 Sandviken (SE)
(72) Inventor: GYLLENFLYKT, Tobias, 811 81 SANDVIKEN (SE)
(74) Representative: Sandvik

(57) **Abstract**

The present invention relates to a method of making a ready-to-print cermet or cemented carbide powder comprising sintered granules comprising sintering the granules in a carburizing atmosphere. Due to the carburizing atmosphere, the granules will have less binder phase on the surface and will not sinter together and will be easy to deagglomerate and the granules will maintain its spherical shape. The present invention also relates to a powder made according to said process as well as the use of the powder in a additive manufacturing process.

## Description

The present invention relates to a method of making a sintered, ready- to -print cermet or cemented carbide powder and also a powder made by such a process. The powder is suitable for additive manufacturing like 3D printing of cemented carbide bodies.

### Background

Three dimensional (3D) printing or additive manufacturing is a promising manufacturing technique that makes it possible to print a three dimensional body. Three dimensional printing is a promising manufacturing technique because it makes it possible to produce complex structures and bodies that cannot be achieved via conventional manufacturing processes.

Making cermet or cemented carbide bodies using 3D printing is known in the art. Cermet and cemented carbide materials consist of hard constituents of carbides and/or nitrides such as WC or TiC in a metallic binder phase of for example Co. These materials are useful in high demanding applications due to their high hardness and high wear resistance in combination with a high toughness. Examples of areas of application are cutting tools for metal cutting, drill bits for rock drilling and wear parts.

One of the challenges when producing cermet and cemented carbide materials using 3D printing is to provide a body with comparable microstructure, i.e. porosity, minimum of Co islands etc. as conventionally produced cermet and cemented carbide materials, i.e. formed by pressing.

However, there has been many attempts to find a suitably powder that is both easy to manufacture, has the appropriate characteristics for 3D printing and which also results in a final sintered cemented carbide with good quality.

In conventional production of cemented carbide bodies using milling, spray drying, pressing and sintering, the powder used in the pressing is not sintered, however for 3D printing, such a powder is too fragile and also too porous. Therefore, the dried powder in the form of granules are sintered to different degrees when used in 3D printing. However, this can cause the granules to adhere to each other since the metal binder at the surface of the granules easily melt together. The sintered powder thus needs to be milled or crushed using extensive force in order to be used in 3D printing. This will lead to non-spherical grains after milling/crushing of the sintered granules which can affect the flowability of the powder.

One way to prevent the granules from sinter together is to use a lower sintering temperature thus forming less metal binder on the surface on the granules, however that lead to less dense granules with more pores. If the granules are too porous, the 3D printed cemented carbide can, after the final sintering, still have pores.

There has also been attempts to prevent the granules from sinter together by physically prevent contact between the granules by e.g. add a powder that can function as a barrier. However, such a process also requires several cleaning steps after sintering to remove the barrier powder before the final powder can be used in 3D printing.

It is an object of the present invention to obtain a method of making a cermet or cemented carbide powder for additive manufacturing which prevents the granules from sintering to each other.

It is an object of the present invention to obtain a method of making a cermet or cemented carbide powder for additive manufacturing which is easy and requires few steps.

It is an object of the present invention to obtain a method of making a cermet or cemented carbide powder for additive manufacturing that has an appropriate porosity a good flowability.

### Detailed description of the invention

The present invention relates to a method of making a powder according to the above. The method comprises the following steps:
- forming a slurry comprising hard constituents, binder metal, organic binder and a solvent;
- from the slurry forming unsintered granules comprising hard constituents, binder metal and organic binder
- loading the unsintered granules in a furnace
- sintering the granules at a temperature between 1200 and Tₛ°C, where Tₛ is the highest temperature where the binder is still in a solid state for a specific cermet or cemented carbide composition, in a carburizing atmosphere to form sintered granules;
- subjecting the sintered granules to a deagglomeration step whereby a powder of sintered granules is formed.

The slurry comprises powders forming hard constituents, binder metal, organic binder and a solvent.

By powders forming hard constituents are herein meant powders selected from carbides, nitrides or carbonitrides of one or more elements of W, Ta, Ti, Nb, Nb, Cr and V.

When making a cemented carbide powder, the hard constituents comprise at least 50 wt% WC grains. The hard constituents can also comprise carbides or carbonitrides of one or more of Ta, Ti, Nb, Cr, Hf, V, Mo and Zr, such as TiN, TiC and/or TiCN.

When making a cermet powder, the hard constituents comprise carbides or carbonitrides of one or more of Ta, Ti, Nb, Cr, Hf, V, Mo and Zr, such as TiN, TiC and/or TiCN.

By metal binder is herein meant one or more elements selected from Co, Ni and Fe, preferably Co. The amount of metal binder in the slurry is suitably between 5 and 14 wt%, preferably between 8 and 14 wt% based on the dry powder weight. The metallic binder phase content is herein calculated excluding the organic binder and solvent.

The organic binder is suitably selected from Polyethyleglycol (PEG) or wax. The amount of organic binder can be between 1 and 5 wt% based on the powder weight.

The solvent can be any solvent suitably for making a slurry, preferably a mixture of water and alcohol.

The forming of the unsintered granules is suitably done by using spray drying or any other suitable technique that can form spherical granules.

The unsintered granules are placed in a furnace on a tray. Preferably, the tray of graphite and is coated with yttrium oxide to prevent the powder from sticking to the tray.

The first part of the sintering cycle is a debinding step where the organic binder is removed. Suitably this is done at a temperature of between 200 and 550°C for a period of time of between 5 and 240 minutes. The debinding can also be done in more than one step, i.e. by stepwise increasing the temperature. The exact debinding process depends on several things, like e.g. furnace type, batch size, type of binder etc.

The second part of the sintering, i.e. the solid state sintering, takes place at a temperature is above 1200 and below Tₛ °C, where Tₛ is the highest temperature where the binder is still in a solid state for a specific cermet or cemented carbide composition. This temperature is usually displayed as a line called "solidus" in the phase diagram for each specific cermet or cemented carbide composition. The solid state sintering is performed for a time period of between 5 and 60 minutes. Preferably, the sintering takes place at a temperature of between 1250 and Tₛ°C, and more preferably between 1250 and 1300°C.

When deciding on the exact sintering temperature, the specific cermet or cemented carbide composition has to be taken into account.

In one embodiment of the present invention, when the metallic binder is Co, the sintering takes place at a temperature between 1250 and 1300°C, preferably between 1260 and 1290°C.

By carburizing atmosphere is herein meant that carbon is added to the furnace. This can be done in several ways, like e.g. one or more carbon containing gases, e.g. CO, CH₄, CO₂. Some carbon contribution can also come from the furnace if it is a graphite furnace.

Preferably the carburizing atmosphere is created by a carbon containing gas, preferably CO, CO₂ and/or CH₄. The partial pressure of the carburizing gas should be at least 50 mBar, preferably at least 75 mBar of the total amount of gas present. The partial pressure of the carburizing gas should be below atmospheric pressure. Other suitable gases that can be present are Ar, H₂ etc. The total pressure in the sintering furnace should be below atmospheric pressure.

After sintering, the granules are usually adhered to each other with weak forces. Only a gentle deagglomeration needs to be performed in order to obtain the final powder. The de-agglomeration is preferably done by a gentle milling in a ball mill without milling liquid etc. If smaller quantities of granules are to be deagglomerated, it can be done by hand using a mortar.

Since the granules are not sintered together but instead are only weakly adhered to each other, the spherical, or rounded shape, achieved from the spray drying step can thus be maintained also after the deagglomeration.

Before using the sintered granules for 3D printing, the ready-to-print powder comprising sintered granules can be subjected to one or more sieving steps. This can be done for several purposes, like e.g. removing any larger pieces that has not been deagglomerated but also to achieve the desired granule size.

The present invention also relates to a ready- to -print cermet or cemented carbide powder comprising sintered granules made according to the method as described above.

By ready- to -print is herein meant that the powder is ready to use in an additive manufacturing process like 3D printing.

The powder comprises sintered granules with an average diameter (D50) of between 15 and 30 µm comprising WC and a metal binder, wherein the sintered granules have a porosity of between 0.1 and 5 vol%.

The porosity of the sintered granules can be determined in different ways. One way is to calculate it by first measuring the density of the granules using a pycnometer. The measured density is then compared with the theoretical (or full) density for the specific cermet or cemented carbide composition. The full density can be either determined by calculation using an appropriate software like e.g. Thermocalc or by measuring it on a sintered piece with no pores made from a powder having the same composition . The difference is assumed to be pores.

Another way of measuring the porosity is to use image analysis on a SEM or LOM image of a cross section of at least 50 sintered granules. The result will then be given in area% but is assumed to be the same value in vol%.

The sintered granules made according the present invention have a surface region with a metal binder content less than the metal binder content in the inner part of the granules.

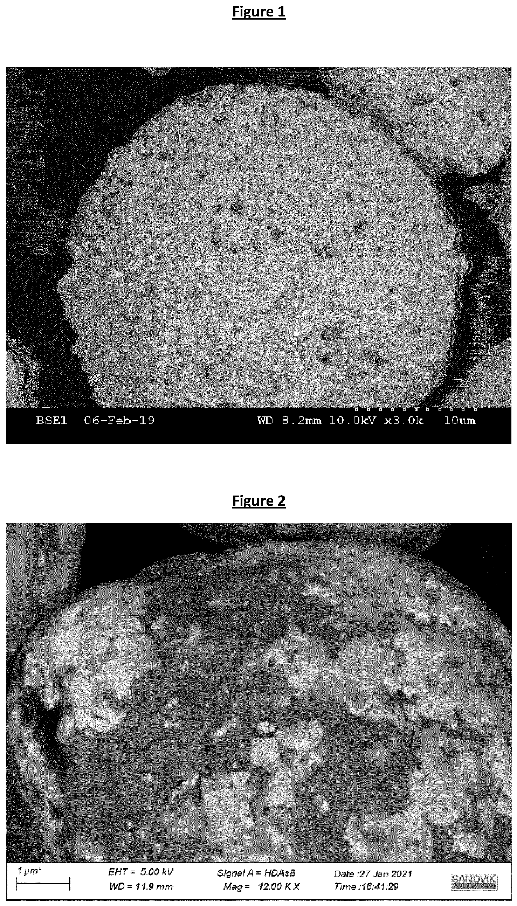

The depletion of the metal binder in the surface region can most easily be seen in a SEM image of a granule where it can be seen that the surface of the granule is covered with WC crystals. The metal binder can sometimes be seen in the bottom of larger gaps in between the WC grains, however not on the actual surface of the granule. See e.g. Figure 1.

The sintered granules are usually spherical, or have a rounded shape which it achieved from the spray drying step. Since the granules is not sintered together during sintering, the shape that they achieved from the spray drying can be maintained.

By an unsintered granule is herein meant a compact particle comprising an organic binder and particles of hard constituents and binder metal.

By sintered granule is herein meant a compact particle comprising particles of hard constituents embedded in a binder metal matrix.

By cermet is herein meant a material comprising hard constituents in a metallic binder phase, wherein the hard constituents comprise carbides or carbonitrides of one or more of Ta, Ti, Nb, Cr, Hf, V, Mo and Zr, such as TiN, TiC and/or TiCN.

By cemented carbide powder is herein meant a material comprising hard constituents in a metallic binder phase, wherein the hard constituents comprise at least 50 wt% WC grains. The hard constituents can also comprise carbides or carbonitrides of one or more of Ta, Ti, Nb, Cr, Hf, V, Mo and Zr, such as TiN, TiC and/or TiCN.

The present invention also relates to the use of the ready-to-print powder described above for making a cermet or cemented carbide body by additive manufacturing, like three dimensional printing.

In one embodiment of the present invention the three dimensional printing is binder jetting. Binder jetting is advantageous in that it is a relatively cheap three dimensional printing method.

3D printing of cermet or cemented carbide pieces are known in the art and the exact printing parameters are up to the person skilled in the art to determine based on the type of printing technology that is used. Usually, the printing step is followed by curing and depowdering, and then a sintering step where the final cermet or cemented carbide piece is achieved.

### Figures

Figure 1 shows a SEM Image of a sintered granule made according to the present invention.
Figure 2 shows a SEM Image of a sintered granule made according to the prior art.

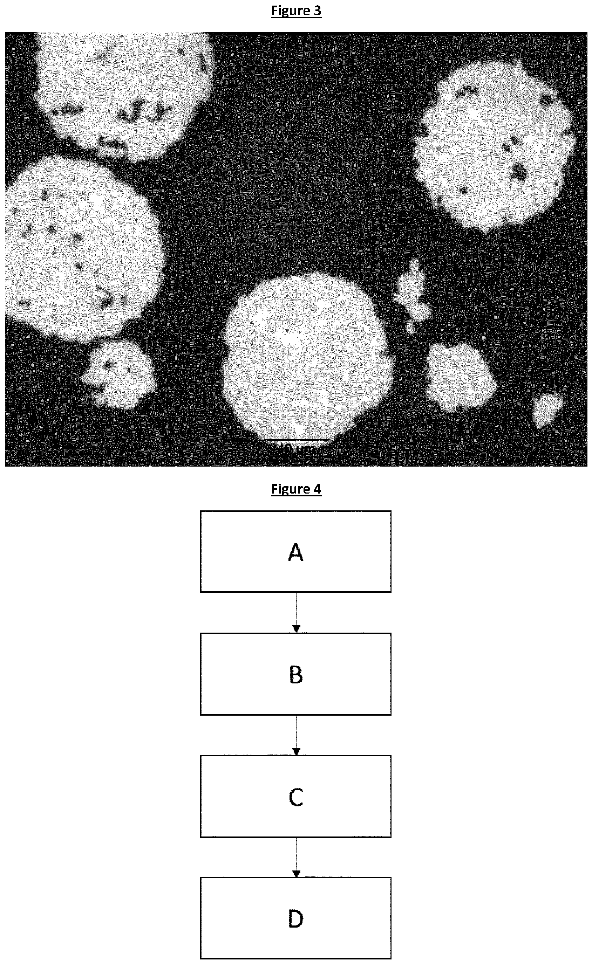

Figure 3 shows a LOM image of a cross section of a granule.
Figure 4 shows the different steps where step A is forming unsintered granules, step B is loading the unsintered granules into a furnace, step C is sintering the unsintered granules in a carburizing atmosphere and step D is subjecting the sintered granules to a deagglomeration step.

### Example 1 (Invention)

Already milled and spray dried ready-to-press (RTP) powders was used as raw material comprising WC, metallic binder and carbides of Cr and when present Ta and Nb. The composition of the different powders based on the elements are shown in Table 1 where the balance is carbon. The WC grain size (FSSS) in Invention 1 and 2 are 0.80 µm and for Invention 3 1.5 µm. In addition to the powder raw materials, the RTP powders also contained 2 wt% PEG, not included in the dry powder weight.

A new slurry was made by dissolving the RTP powder into a solvent of ethanol and water in a ratio of 78/22 and by adding 2 wt% extra PEG. The slurry was spray dried to small granules with a D50 around 25um.

The unsintered granules were placed in a sintering furnace on a graphite tray coated with yttrium oxide and was first subjected to a debinding step in hydrogen atmosphere which included a stepwise increase in temperature to 500°C for a time of 170 min. Then the temperature was increased in a Ar atmosphere (200mBar partial pressure) to the maximum sintering temperature of 1275°C where CO and Ar were introduced at a 1:1 flow ratio at 250mbar partial pressure. The temperature and CO/Ar atmosphere was maintained for 60 min. After that, the granules were cooled down to room temperature by free cooling.

The sintering resulted in a cake of sintered granules which was subjected to a deagglomeration which was done in a ball mill using 100kg cylpebs with 30kg powder. The ball milled was ran dry without any milling liquid. The deagglomeration time was between 10 to 40min depending on sample.

The powder were then sieved at 63µm.

The resulting cemented carbide powder comprising sintered granules is herein denoted Invention 1-3.

A SEM image of a sintered granule of Invention 1 is shown in Figure 1.

**Table 1**

| Sample | W [wt%] | Co [wt%] | Cr [wt%] | Ta [wt%] | Nb [wt%] |
|---|---|---|---|---|---|
| Invention 1 | 84.1 | 10 | 0.43 | 0 | 0 |
| Invention 2 | 81.4 | 13 | 0.56 | 0 | 0 |
| Invention 3 | 81.1 | 12 | 0 | 1.35 | 0.15 |

The particle size of the sintered granules was measured by Laser diffraction of the dry granules in an interval of 0.5 and 175 µm. The results are shown in Table 2.

**Table 2**

| Sample | D10 | D50 | D90 |
|---|---|---|---|
| Invention 1 | 7.8 | 18.4 | 32.1 |
| Invention 2 | 8.4 | 18.7 | 32.6 |
| Invention 3 | 8.5 | 19.7 | 35.5 |

### Example 2

The same unsintered granules as used in Invention 1 from Example 1 were sintered in the same way as in Example 1 but at different maximum temperatures using a mix of CO and H₂ atmosphere(in a ratio of 1:1 total partial pressure 250mBar) (same for all 3 samples). In the end of the cycle 50bar (Ar) high pressure was applied. The samples are called Invention 1a-c.

The porosity was measured by image analysis on a LOM (Light optic microscope) image (2000 magnification) on a cross section of a granule using the software Image J. An average of approx. 50 granules was analyzed per powder sample. The powder sintered at 1300°C was noticeable more difficult to deagglomerate and thus the granules were deformed to a higher extent compared to 1250 and 1275°C.

**Table 3**

| | Invention 1a | Invention 1b | Invention 1c |
|---|---|---|---|
| Sintering Temp. (°C) | 1250 | 1275 | 1300 |
| Porosity [area%] | 11.1 | 3.1 | 0.42 |

### Example 3 (Comparative)

Sintered granules were made from a powder having the same composition as Invention 1 in Example 1 according to the process described in US 2017/0072469 using graphite powder as a physical barrier. The graphite powder was removed after sintering. A SEM image of a sintered granule is shown in Figure 2.

### Example 4 (Printing)

The sintered granules, Invention 2 from Example 1, was used to print sample cubes (15x15x6mm). The cubes were produced through binder jet printing. The printing was done using a ExOne Innovent+ with a layer thickness of 50um during the printing. Saturation during the printing was set to 80%. The cubes were then sintered with a high pressure sintering cycle with a maximum temperature 1410°C for 90 minutes. In the end of the cycle 50bar high pressure was applied. All physical properties were within the specification for this substrate if would have been made using conventional methods i.e. compaction instead of printing as forming step.

**Table 4**

| Granules | Hc [kA/m] | Com [%] | Density [g/cm³] | Porosity | | |
|---|---|---|---|---|---|---|
| | | | | A | B | C |
| Invention 2 | 16.3 | 11.6 | 14.10 | 02 | 00 | 00 |

## Claims

1. A method of making a ready-to-print cermet or cemented carbide powder comprising sintered granules comprising the following steps:
- forming a slurry comprising hard constituents, binder metal, organic binder and a solvent;
- from the slurry, forming unsintered granules comprising hard constituents, binder metal and organic binder
- loading the unsintered granules in a furnace
- sintering the granules at a temperature between 1200 and Tₛ °C, where Tₛ is the highest temperature where the binder is still in a solid state for a specific cermet or cemented carbide composition, in a carburizing atmosphere to form sintered granules;
- subjecting the sintered granules to a deagglomeration step whereby a powder of granules is formed.

2. A method according to claim 1 wherein the carburizing atmosphere is provided by one or more carburizing gases selected from CO, CO₂ and CH₄.

3. A method according to claim 2 wherein the carburizing gas is present at a partial pressure of at least 50 mBar.

4. A method according to any of the preceding claims wherein the ready-to-print powder is a cemented carbide powder wherein the hard constituents comprise at least 50 wt% WC grains.

5. A method according to any of the preceding claims wherein the metal binder is one or more elements selected from Co, Ni and Fe and wherein the amount metal binder is between 5 and 14 wt% based on dry powder weight.

6. A method according to any of the preceding claims wherein the sintering temperature is between 1250 and 1300°C.

7. A method according to any of the preceding claims the metallic binder is Co and the sintering temperature is between 1260 and 1290°C.

8. A method according to any of the preceding claims wherein the ready-to-print cermet or cemented carbide powder comprising sintered granules are subjected to one or more sieving steps.

9. A ready-to-print cermet or cemented carbide powder comprising sintered granules made according to the method of claims 1-8.

10. A ready-to-print cermet or cemented carbide powder according to claim 9 wherein the granules have a average particle size of between 15 and 30 µm.

11. A ready-to-print cermet or cemented carbide powder according to any of claims 9-10 wherein the porosity of the granules is between 0.1 and 5vol%.

12. A ready-to-print cermet or cemented carbide powder according to any of claims 9-11 wherein the powder is a cemented carbide powder.

13. Use of the ready-to-print cermet or cemented carbide powder according to any of claims 9-12 in an additive manufacturing process for making a cermet or cemented carbide body.

14. Use of the ready-to-print cermet or cemented carbide powder according to claim 13 wherein the additive manufacturing process is binder jetting.
